# EUROPÄISCHE PATENTANMELDUNG

(11) **EP 0 814 003 A2**
(43) Veröffentlichungstag der Anmeldung: **29.12.1997**
(21) Anmeldenummer: 97109796.9
(22) Anmeldetag: 17.06.1997
(51) Int. Cl.: B60R 25/10

(54) **Sensoranordnung für eine Ultraschall-Überwachungseinrichtung zum Überwachen eines Kfz-Inenraumes**

(30) Priorität: 18.06.1996 DE 19624183
(71) Anmelder: F + G Megamos Sicherheitselektronik GMBH, 51674 Wiehl (DE)
(72) Erfinder: Klimm, Christian, 51647 Gummersbach (DE)
(74) Vertreter: Cohausz & Florack

(57) **Zusammenfassung**

Die Erfindung betrifft eine Sensoranordnung für eine Ultraschall-Überwachungseinrichtung zum Überwachen eines Kfz-Innenraums bestehend aus mindestens einem Empfangs- und mindestens einem Sendeelement mit jeweils vorgebbaren Richtcharakteristiken sowie einer Signalverarbeitungselektronik zur Ansteuerung der Empfangs- und Sendeelemente und zur Auswertung der vom Innenraum reflektierten empfangenen Signale. Zur Herabsetzung des Montageaufwandes sowie zur Erhöhung der Betriebssicherheit der Ultraschall-Überwachungseinrichtung ist erfindungsgemäß vorgesehen, daß die Sensoranordnung (S) an einer auf der Fahrzeugmittellinie liegenden Position hinter der für eine Schiebedachöffnung vorgesehenen Fläche angebracht ist.

## Beschreibung

Die Erfindung betrifft eine Sensoranordnung für eine Ultraschall-Überwachungseinrichtung zum Überwachen eines Kfz-Innenraums bestehend aus mindestens einem Empfangs- und mindestens einem Sendeelement mit jeweils vorgebbaren Richtcharakteristiken sowie einer Signalverarbeitungselektronik zur Ansteuerung der Empfangs- und Sendeelemente und zur Auswertung der vom Innenraum reflektierten empfangenen Signale.

Eine Vorrichtung der eingangs genannten Art ist aus der DE 41 32 523 bekannt. Bei dieser Lösung ist die Sensoranordnung nahe am Dach im oberen Bereich des sogenannten B-Holmes, d.h. zwischen dem vorderen und hinteren Seitenfenster angebracht. Die Richtcharakteristik der Keule des Sensors muß dann so ausgelegt sein, daß der gesamte interessierende Bereich des Kfz-Innenraumes erfaßt werden kann. Hierzu sind immer mindestens zwei Sensormodule, nämlich an jedem B-Holm mindestens eins erforderlich.

Aus der DE 37 32 936 ist eine Alarmanlage für die Innenraumabsicherung von Fahrzeugen bekannt, bei der das Sensormodul Bestandteil der Innenausstattung des Fahrzeuges, und zwar insbesondere der Innenbeleuchtung ist. Hierdurch ergibt sich der Vorteil, daß nur ein einziges Sensormodul verwendet werden muß, welches im Vorderbereich des Fahrzeuges, d.h. entweder im Armaturenbrett oder im vorderen Fahrzeugdachbereich, angeordnet ist. Nachteile dieser Lösung sind jedoch darin zu sehen, daß durch Abschattungen bedingt durch die Vordersitze die Reichweite der Überwachung eingeschränkt ist und insbesondere die Bereiche hinter den Vordersitzen nicht mit abgesichert sind.

Aus der EP 0 541 565 ist ein Ultraschall-Überwachungssystem für einen Kfz-Innenraum bekannt, bei dem ebenfalls zwei Sendeelemente vorgesehen sind, deren Hauptkeulen der Richtcharakteristiken in unterschiedliche Richtungen ausgerichtet sind. Auch bei dieser bekannten Vorrichtung sind die Sensoranordnungen im Bereich des B-Holmes bzw. oberhalb der Türen angeordnet, so daß je Fahrzeug wiederum mindestens zwei Sensormodule erforderlich sind. Ein weiterer Nachteil bei dieser Gestaltung besteht darin, daß bei geöffneten Seitenscheiben die Fehlalarmhäufigkeit steigt. Es kann nämlich bei einer solchen Sensoranordnung nicht unterschieden werden, ob die Bewegung aus dem Innenraum des Fahrzeugs stammt oder aber von außerhalb, beispielsweise durch vorbeigehende Passanten.

Davon ausgehend liegt der Erfindung die Aufgabe zugrunde, eine Sensoranordnung der eingangs genannten Art dahingehend weiterzuentwickeln, daß einerseits eine konstruktive Vereinfachung möglich ist und zum anderen ein möglichst großer Bereich des Fahrzeuginnenraumes abgedeckt wird.

Diese Aufgabe wird erfindungsgemäß dadurch gelöst, daß die Sensoranordnung an einer auf der Fahrzeugmittellinie liegenden Position hinter der für eine Schiebedachöffnung vorgesehenen Fläche angebracht ist.

Die Erfindung zeichnet sich dadurch aus, daß durch die Positionierung des Sensormoduls im Bereich der Fahrzeugmitte nahezu der gesamte Innenraum des Fahrzeuges von einem einzigen Sensormodul aus erfaßt werden kann. Es kommt daher nicht zu den aus dem Stand der Technik bekannten Abschattungseffekten. Dies gilt insbesondere auch für die Überwachung des Laderaums bei Kombi-Fahrzeugen, die durch eine entsprechende Anordnung des Sensormoduls ebenfalls gewährleistet ist. Die für die Realisierung der erfindungsgemäßen Sensoranordnung verwendete Signalverarbeitungselektronik besitzt eine geringere Komplexität als eine Schaltung mit Sensoren, die z.B. in den B-Holmen von Fahrzeugen verbaut werden. Die für die Signalverarbeitung notwendigen Schaltungsblöcke müssen nur einmalig vorhanden sein, wie z.B. Vorverstärker, Hüllkurvengleichrichter, Endverstärker, Regelschaltungen u.a.. Im Vergleich dazu müssen die Schaltungsblöcke für Sensoren im B-Holm mindestens 2-fach ausgeführt sein. Dabei wird die räumliche Nähe zu den Sensoren ausgenutzt, um die Schaltungsblöcke mehrfach zu benutzen. Der Vorteil besteht darin, daß die verringerte Komplexität zu geringeren Kosten führt. Ein weiterer Vorteil der Anordnung besteht darin, daß die Anordnung unempfindlicher gegen EMV-Einstrahlung ist. Leitungswege, wie sie zur Analogsignalübertragung bei B-Holm-Systemen verwendet werden und kritisch bezogen auf EMV-Einstrahlung sind, werden bei der erfindungsgemäßen Lösung nicht benötigt. Deswegen können hier auch keine störenden Signale eingekoppelt werden.

Der bevorzugte Bereich der Position der Sensoranordnung ist im Fahrzeugdachmittelpunkt, weil von dort nahezu alle Bereiche des Fahrzeuginneren erfaßt werden.

Eine weiter bevorzugte Lösung sieht vor, daß die Sensoranordnung und die Signalverarbeitungselektronik räumlich beabstandet zueinander angeordnet sind. Es muß dann nur eine einzige Kabelverbindung zwischen dem im Fahrzeugdach angeordneten Sensor und der Signalverarbeitungselektronik hergestellt werden, wobei letztere einen Mikrocontroller für die Signalverarbeitung enthält.

Alternativ dazu kann aber auch vorgesehen sein, daß die Sensoranordnung die Signalverarbeitungselektronik, die insbesondere einen Mikrocontroller aufweist, als integralen Bestandteil enthält. In diesem Fall ist der Einbauaufwand weiter optimiert, da die gesamte Sensoranordnung für die Ultraschallüberwachung als Komplettbaueinheit installiert werden kann.

Jede Sensoranordnung kann nicht nur, wie in der einfachsten Gestaltung, mit einem Sender und einem Empfänger ausgestattet sein, sondern jeweils mit einer beliebigen Anzahl von Sendern bzw. Empfängern. Je nach Anwendungsfall und gewünschter Sicherheit gegen Fehlalarme läßt sich die Anzahl der Empfangs- bzw. Sendeelemente entsprechend anpassen. Eine bevorzugte Variante sieht hierzu zwei Sender und zwei Empfänger vor.

Eine andere Ausgestaltung der erfindungsgemäßen Lösung sieht vor, daß zwei im Bereich der Fahrzeugdachmitte angeordnete Sensoranordnungen vorgesehen sind, wobei jedem Seitenfenster jeweils eine Sensoranordnung zugeordnet ist. Mit dieser Gestaltung kann auch bei geöffneten Seitenscheiben festgestellt werden, ob die erfaßte Bewegung aus dem Bereich innerhalb oder außerhalb stammt. Hierzu müssen die Sende-/ Empfangselemente hinsichtlich ihrer Laufzeiteffekte so aufeinander abgestimmt sein, daß aus der Laufzeitdifferenz auf die Herkunft des erfaßten Alarmsignals geschlossen werden kann.

Die Erfindung wird im folgenden anhand eines Ausführungsbeispieles näher erläutert.

Hierzu zeigen:
- Fig. 1: einen Längsschnitt durch ein herkömmliches Kraftfahrzeug und
- Fig. 2: eine Draufsicht auf ein herkömmliches Kraftfahrzeug, jeweils in aufgebrochener Darstellung.

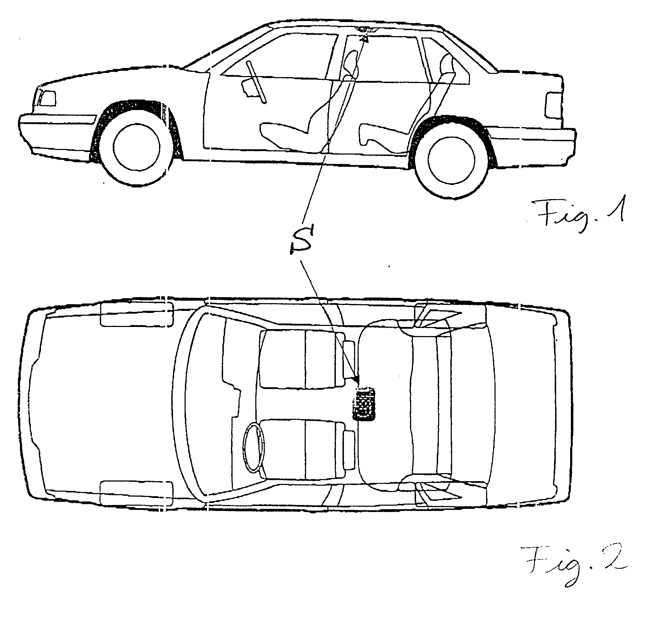

Wie aus den Pfeil-Positionen in den Figuren 1 und 2 der hervorgeht, befindet sich diese im Bereich des Fahrzeugdaches eine Sensoranordnung S, und zwar einerseits auf der gedachten Mittellinie des Fahrzeuges. Andererseits ist die Sensoranordnung so weit nach hinten auf die Mittellinie versetzt, daß sie hinter der für eine Schiebedachöffnung vorzusehenden Fläche angebracht ist. D.h., sie befindet sich bei einem Fahrzeug mit Schiebedach (nicht dargestellt) hinter der hinteren Kante der Dachöffnung und bei Fahrzeugen ohne Schiebedach hinter einer entsprechenden gedachten Linie.

Das Sensormodul besteht aus einem Sendeelement und einem Empfangselement, wobei beide Elemente jeweils vorgebbare Richtcharakteristiken aufweisen. In die Sensoranordnung integriert ist eine Signalverarbeitungselektronik, die einen Mikrocontroller enthält. Dieser dient zur Ansteuerung der Empfangs- und Sendeelemente mit den erforderlichen Ultraschallimpulsen sowie zur Auswertung der von den Sendeelementen erfaßten Signale entsprechend der vom Innenraum reflektierten Ultraschallwellen.

Die Sensoranordnung ist in die Dachverkleidung des Fahrzeuges integriert installiert, wobei zur Erhöhung der Betriebssicherheit eine blickdichte Abdeckung über den Sende-/ Empfangselementen vorgesehen ist. Diese kann entweder aus einem metallischen Gitter oder aus Stoff bestehen.

Der Einbau der gezeigten Sensoranordnung in das Kraftfahrzeug ist mit erheblich reduziertem Verkabelungsaufwand möglich, da entgegen der Lösung des Standes der Technik nunmehr nicht mehr elektrische Querverbindungen zwischen den jeweils in den B-Holmen angeordneten Sensormodulen erforderlich sind.

## Patentansprüche

1. Sensoranordnung für eine Ultraschall-Überwachungseinrichtung zum Überwachen eines Kfz-Innenraums bestehend aus mindestens einem Empfangs- und mindestens einem Sendeelement mit jeweils vorgebbaren Richtcharakteristiken sowie einer Signalverarbeitungselektronik zur Ansteuerung der Empfangs- und Sendeelemente und zur Auswertung der vom Innenraum reflektierten empfangenen Signale,
**dadurch gekennzeichnet,** daß die Sensoranordnung (S) an einer auf der Fahrzeugmittellinie liegenden Position hinter der für eine Schiebedachöffnung vorgesehenen Fläche angebracht ist.

2. Sensoranordnung nach Anspruch 1,
**dadurch gekennzeichnet,** daß die Sensoranordnung (S) im Bereich des Fahrzeugdachmittelpunktes angebracht ist.

3. Sensoranordnung nach Anspruch 1,
**dadurch gekennzeichnet,** daß die Sensoranordnung (S) und die Signalverarbeitungselektronik räumlich zueinander beabstandet angeordnet sind.

4. Sensoranordnung nach Anspruch 1,
**dadurch gekennzeichnet,** daß die Sensoranordnung (S) die Signalverarbeitungselektronik, die insbesondere einen Mikrocontroller aufweist, als integralen Bestandteil enthält.

5. Sensoranordnung nach Anspruch 4,
**dadurch gekennzeichnet,** daß der Mikrocontroller ein EEPROM zur Parametrierung enthält.

6. Sensoranordnung nach Anspruch 4,
**dadurch gekennzeichnet,** daß die Sensoranordung hinter einer blickdichten Abdeckung, in die Dachverkleidung integriert, installiert ist.

7. Sensoranordnung nach Anspruch 6,
**dadurch gekennzeichnet,** daß die blickdichte Abdeckung ein Gitter ist.

8. Sensoranordnung nach Anspruch 6,
**dadurch gekennzeichnet,** daß die blickdichte Abdeckung aus Stoff ausgebildet ist.

9. Sensoranordnung nach Anspruch 1,
**dadurch gekennzeichnet,** daß die Sensoranordnung zwei Sender und zwei Empfänger enthält.

10. Sensoranordnung nach Anspruch 1,
**dadurch gekennzeichnet,** daß die Sensoranordnung vier kombinierte Sende-/ Empfangselemente aufweist.

11. Sensoranordnung nach Anspruch 1,
**dadurch gekennzeichnet,** daß mindestens zwei Sensoranordnungen vorgesehen sind, wobei jedem Seitenfenster mindestens eine Sensoranordnung zugeordnet ist.

12. Verwendung einer Sensoranordung nach einem der zuvor genannten Ansprüche zur Überwachung des Laderaumes bei Kombi-Fahrzeugen.
